# EUROPEAN PATENT APPLICATION

(11) **EP 4 632 593 A1**
(43) Date of publication of application: **15.10.2025**
(21) Application number: 24169278.9
(22) Date of filing: 09.04.2024
(51) Int. Cl.: G06F 16/23

(54) **COMPUTER-IMPLEMENTED METHOD FOR PROVIDING A DATA CONSISTENCY BETWEEN A FIRST DATA SOURCE AND AT LEAST A SECOND DATA SOURCE IN A DATA ENGINEERING SYSTEM**

(71) Applicant: ABB SCHWEIZ AG, 5400 Baden (CH)
(72) Inventor: ESKANDANI, Nafise, 64380 Rossdorf (DE); GRUENER, Sten, 69514 Laudenbach (DE); HOERNICKE, Mario, 76829 Landau (DE)
(74) Representative: Maiwald GmbH

(57) **Abstract**

The present invention relates to a computer-implemented method (100) for providing a data consistency between a first data source (20) and at least a second data source (22) in a data engineering system (200), comprising the following steps:
- Providing (102) first data (10) from at least a first data source (20) and / or at least a second data source (22);
- Detecting (104), by an update detector component (50), a change information (8) for the first data (10);
- Providing (106), by a version area component (59), a first version information (70) of the detected change information (8);
- Validating (108), the change information (8) for the first data (10), by a policy validator component (54), wherein a policy information (55) containing at least a consistency rule is executed on a common information model (52) to decide about a consistent state of the first data (10) defining whether the change information (8) can be applied to the first data (10),
- Updating (112), by the version controller component (58), the first version information (70) to a second version information (72) of the validated change information (8), when the consistent state of the change information (8) is confirmed, and in case, the consistent state of the change information (8) is not confirmed, perform a step (118) of repairing the detected data inconsistency of the change information (8), before re-validating the change information (8) and updating the first version information (70);
- Supplying (114) the change information (8) with the version information (70) as a production projection (80) to at least a client engineering application (82).

## Description

### FIELD OF THE INVENTION

The present invention relates to a computer-implemented method for providing a data consistency between a first data source and at least a second data source in a data engineering system.

### BACKGROUND OF THE INVENTION

In a data engineering system such as an industrial system or a process in an industrial plant, engineering data that are processed in a defined process workflow can come from different sources due to a variety of reasons such as multidisciplinary nature of engineering, supply chain and partnerships, lifecycle phases involving multiple organizations, and regulations and standards. Each of these data contribute to a broader understanding of a system, process, or product. The WO 2024040902 A1 refers to an example of distributed system to provide consistency of data coming from different sources.

However, effectively managing and integrating this data originating from various sources within a data engineering system or within an industrial process is a complex task. This requires consideration of multiple technical and non-technical aspects when handling these data streams within the data engineering system such as data quality, compatibility, privacy, and collaboration workflow among various participants.

Further, the process of integrating data originating from different data sources, tools and systems introduces significant technical complexities. When multiple stakeholders, whether individuals or groups, own segments of the integrated dataset, the potential for conflicts regarding data ownership, access rights, and usage permissions becomes apparent. The challenges intensify when dealing with longitudinal data, where changes in measurement procedures, development, or instrumentation can introduce inconsistencies across time points, in the sense of different "versions" of data. Sustaining accuracy and consistency for such data requires continuous monitoring, validation, and recalibration efforts which are error-prone, tedious, and expensive.

There is a need to address these issues.

### SUMMARY OF THE INVENTION

Therefore, it would be advantageous to provide an improved concept to enable consistent persistency of partially owned engineering data and facilitate version controlling of such data within a data engineering system in an efficient, secure, and automated manner.

The object of the present invention is solved by the subject matter of the independent claims, wherein further embodiments are incorporated in the dependent claims.

In a first aspect of the present invention, there is provided a computer-implemented method for providing a data consistency between a first data source and at least a second data source in a data engineering system, comprising the following steps:
- Providing first data from at least a first data source and / or at least a second data source;
- Detecting, by an update detector component, a change information for the first data;
- Providing, by a version area component, a first version information of the detected change information;
- Validating, the change information for the first data, by a policy validator component, wherein a policy information containing at least a consistency rule is executed on a common information model to decide about a consistent state of the first data defining whether the change information can be applied to the first data,
- Updating, by the version controller component, the first version information to a second version information of the validated change information, when the consistent state of the change information is confirmed, and in case, the consistent state of the change information is not confirmed, perform a step of repairing the detected data inconsistency of the change information, before re-validating the change information and updating the first version information; and
- Supplying the change information with the version information as a production projection to at least a client engineering application.

In other words, an important aspect of the present invention is that data originating from different data sources are checked against a set of policies. Policies play a pivotal role in maintaining the consistency of data by establishing a set of unchanging guidelines or invariants that govern various properties. These properties are carefully tailored, e.g. based on needs of the particular application or project, to align with the specific needs and requirements, use cases, and preferences of an enterprise.

Guidelines or invariants are designed to ensure that the one party's preferences and changes are not conflicting with the enterprise's overall goals and requirements, while also accounting for factors such as security, compliance, and performance.

Using (user-)defined rules, policies and policy management platforms in the present invention for assessing consistency of data from different sources allow to specify which data owner has a higher priority to be the source of truth in the case of simultaneous updates. For example, a data retention policy could specify that customer transaction records must be stored for a minimum of seven years. This policy establishes an unchanging guideline that shapes the behavior of the system's data management processes.

Once the to-be assessed data in the data engineering system is validated, the data is tagged, e.g. by timestamp, to create new versions of this data that can be used within the data engineering system without the danger of potential data conflicts with other data. The present invention, validated and versioned data are then stored for example in a global registry of the data engineering system by using these rules and policy management platforms.

Further, these policies can by automatically adapted upon changes of requirements that specify the high-level directives into concrete technical specifications. Considering these specifications, database schemas can be generated, and different versions of data can be populated into the database. An aspect to achieve these advantages is to store valid and versioned data in a global registry of the data engineering system by using of rules and policy management platforms.

The present invention provides the advantage to reduce the costs of data managing and handling of data versioning of such data coming from different data sources. Further, the reliability of the integrated data is improved and automatically versioning and managing conflicts of partially owned data is enabled in an efficient manner.

A further advantageous aspect of the present invention is the use of a graph-based database to facilitate search in the database and visualize relationships between entities of complex engineering data and queries.

According to an example, the step of validating the change information includes the step of verifying the change information, by a requirement refiner component, whether the change information fulfils at least a predefined requirement criterion. In this way, an efficient data validating is ensured.

According to an example, the step of repairing the detected data inconsistency of the change information of the first data comprises a step of marking the detected data inconsistency and blocking to send the change information to the production projection as long as the detected data inconsistency of the change information exists. In this way, it is avoided that data inconsistencies and data conflicts are provided to the production projection influencing its functionality.

According to an example, the step of repairing the detected data inconsistency of the change information comprises the step of temporarily projecting the detected data inconsistency, by a client versioning and management interface, to a staging component that initiates repair of the detected data inconsistency of the change information of the first data. In this way, the detected data inconsistency can be efficient resolved.

According to an example, wherein after the step of repairing the detected data inconsistency of the change information is successfully performed, the repaired changed information is sent back from the staging component to the version controller component for performing the step of re-validating the repaired change information of the first data. In this manner, data validating of the repaired change information of the first data is ensured.

According to an example, after successful re-validating of the change information of the first data, providing the change information to the second data source. In this way, it is ensured that only validated data are transferred and used which avoids potential data conflicts with the data engineering system.

According to an example, the repair of the detected data inconsistency of the change information of the first data is performed by a user-related client engineering application. In this way, efficient and user-oriented repair of data inconsistencies of change information of the first data can be ensured.

According to an example, the provided second version information is permanent in case the change information of the first data is in a consistent state, and the provided second version information is temporary in case the change information of the first data is in an inconsistent state. In this way, change information of the first data is handled in an efficient manner on basis of different application scenarios.

According to an example, the policy information is provided by a policy database. In this way, the policy information can be efficiently provided and updated depending on different or changing application scenarios.

According to an example, the policy database is connectable to at least a policy editor component to edit the policy information of the policy database. In this manner, policy information can be updated in an efficient manner when an application scenario of the data engineering system is changing.

According to an example, a client versioning and management component is provided that has interfaces to each of at least one of the version controller component, the requirement refiner component and the policy editor to provide user-related client versioning information to any of these components. In this way, flexibility of the data versioning of the first data is ensured.

According to an example, the change information is a newly-added data information contained in the first data source, but not in the second data source. In this way, a dedicated data sharing to different data sources is enabled.

In a second aspect of the present invention, a data engineering system that is configured to execute the method according to any of the previous examples and / or according to the first aspect for providing a data consistency between a first data source and at least a second data source in this data engineering system is provided.

In a third aspect of the present invention, a computer system that is configured to execute the computer-implemented method according to any of the previous examples and / or according to the first aspect for providing a data consistency of a distributed data engineering system is provided.

In a fourth aspect of the present invention, a computer comprising a processor configured to perform the method according to the first aspect and / or according to any of the previous examples is provided.

In a fifth aspect of the present invention, a computer program product comprising instructions which, when the computer program is executed by a processor of a computer, causes the computer to perform the method of the first aspect and / or of any of the previous examples.

In a sixth aspect of the present invention, a machine-readable data medium and / or download product is provided containing the computer program according to the fifth aspect.

### BRIEF DESCRIPTION OF THE DRAWINGS

Exemplary embodiments will be described in the following with reference to the following drawings:
Fig. 1 illustrates a schematic flow-diagram of a method of the present invention; and
Fig. 2 illustrates a data engineering system for providing a data consistency between a first data source and a second data source according to an embodiment of the present invention.

### DETAILED DESCRIPTION OF THE DRAWINGS

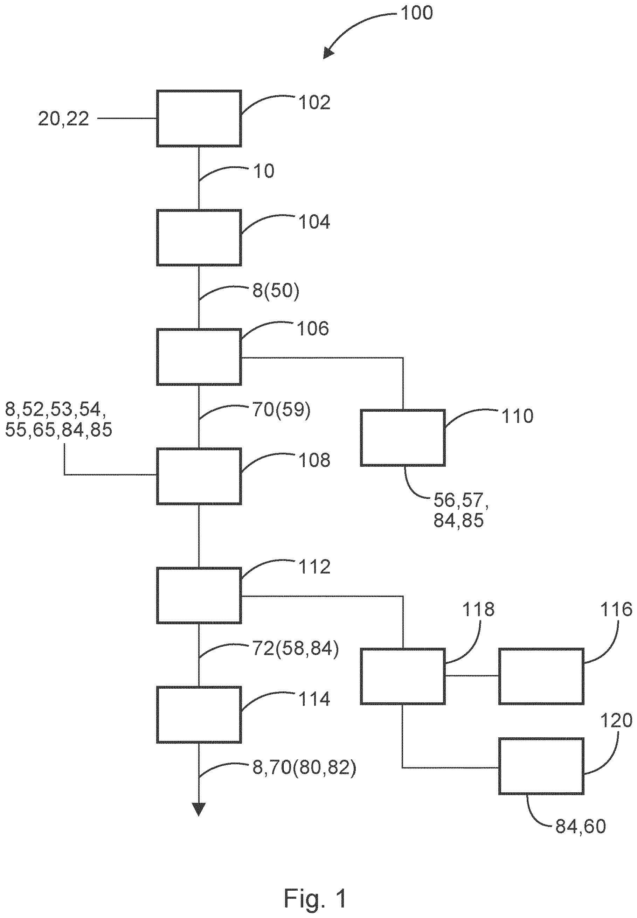

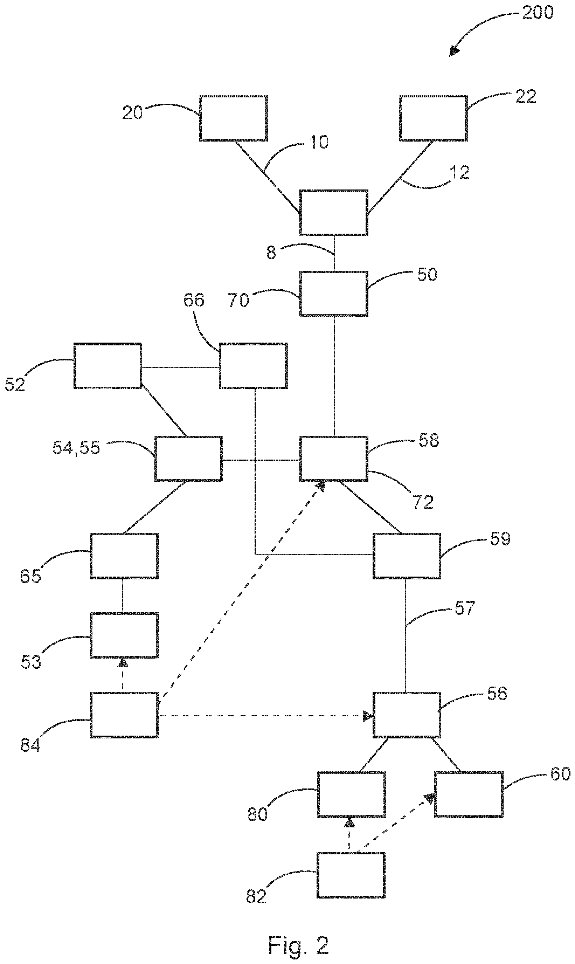

Fig. 1 (with references to Fig. 2 for further details of the involved technical components of the data engineering system 200 performing the method steps of the method 100) illustrates a schematic flow-diagram of a method 100 for providing a data consistency between a first data source 20 and at least a second data source 22 in a (distributed) data engineering system 200.

In a first step 102, first data or data 10 from at least a first data source 20 and / or at least a second data source 22 is provided.

In a second step 104, a change information 8 for the first data 10, by an update detector component 50, is detected.

In a third step 106, a first version information 70 of the detected change information 8 is provided by a version area component 59.

Optionally, the step 106 of validating the change information 8 includes a step of verifying 110 the change information 8, by a requirement refiner component 56, whether the change information 8 fulfils at least a predefined requirement criterion 57.

In a fourth step 108, the change information 8 for the first data 10 is validated, by a policy validator component 54, wherein a policy information 55 containing at least a consistency rule is executed on a common information model 52 to decide about a consistent state of the first data 10 defining whether the change information 8 can be applied to the first data 10.

The policy information 55 may be provided by a policy database 65. The policy database 65 may be connectable to at least a policy editor component 53 to edit the policy information 55 of the policy database 65 (see Fig. 2).

In a fifth step 112, updating is performed, by the version controller component 58, of the first version information 70 to a second version information 72 of the validated change information 8, when the consistent state of the change information 8 is confirmed.

In case, the consistent state of the change information 8 is not confirmed, a step 118 of repairing the detected data inconsistency of the change information 8 is performed, before re-validating the change information 8 and updating the first version information 70. The repair of the detected data inconsistency of the change information 8 of the first data 10 may be performed by a user-related client engineering application 82 (see Fig. 2).

It should be noted in this context, that the provided second version information 72 is permanent in case the change information 8 of the first data 10 is in a consistent state, and the provided second version information 72 is temporary in case the change information 8 of the first data 10 is in an inconsistent state.

Optionally, the step 118 of repairing the detected data inconsistency of the change information 8 of the first data 10 comprises a step 116 of marking the detected data inconsistency and blocking to send the change information 8 to the production projection 80 as long as the detected data inconsistency of the change information 8 exists.

Optionally, the step 118 of repairing the detected data inconsistency of the change information 8 comprises the step 120 of temporarily projecting the detected data inconsistency, by a client versioning and management interface 84, to a staging component 60 that initiates repair of the detected data inconsistency of the change information 8 of the first data 10.

Optionally, after the step 118 of repairing the detected data inconsistency of the change information 8 is successfully performed, the repaired changed information 8 is sent back from the staging component 60 to the version controller component 58 for performing the step 108 of re-validating the repaired change information 8 of the first data 10.

After successful re-validating of the change information 8 of the first data 10, the change information 8 is provided to the second data source 22.

Optionally, the change information 8 is a newly-added data information contained in the first data source 20, but not in the second data source 22.

In a sixth step 114, the change information 8 with the version information 70 as a production projection 80 is supplied to at least a client engineering application 82.

Optionally, according to Fig. 1 and Fig. 2, a client versioning and management component 84 is provided that has interfaces to each of at least one of the version controller component 58, the requirement refiner component 56 and the policy editor 53 to provide user-related client versioning information 85 to any of these components.

Fig. 2 illustrates a data engineering system 200 for providing a data consistency between a first data source 20 and a second data source 22 according to an embodiment of the present invention by executing the method 100 according to the present invention.

In order to avoid repetitions, a concrete example data flow of the method 100 with the involved components of the (distributed) data engineering system 200 focusing on important aspects of the present invention is described in the following referring to Fig. 2:
1. There are two data sources 20, 22, such as tag list and P&ID available as source 20 and source 22, respectively. A consistency policy ensures that each tag name in the P&ID is present in the tag list.
2. The mapping is created within the common information model 52, however only for "Tag A" and "Tag B" which are consistent.
3. Now an update in the tag list is detected - "Tag C" is added to the tag list, but not to the P&ID.
4. Update detector/Version controller component 58 detects the changes and versions it in the versioning area 59.
5. Updates are passed through the content mapper 66 and the exact common information model is created.
6. Policy validation component 54 tries to execute the consistency rules on the common information model 52, and an inconsistency is detected "Tag C missing in the P&ID".
7. The inconsistency is marked, and the push to the production projection 80 is blocked.
8. By using the client versioning and management interface 84, the inconsistent vision can temporarily be projected to the staging area 60, where native tools can be used to repair the data inconsistency.
9. Once repaired manually, e.g., added a Tag C to the Excel document, the change from the native client can be pushed back to the staging component 60 and then back to the versioning area component 59.
10. Once re-validation of the change information 8 of the first data 10 is successful, the following steps are performed:
   a. Push to the client engineering application 82.
   b. A corrective up-stream push to source 22 is done which may be detected by the client.

### Reference signs

- 8: Change information
- 10: First data
- 12: Second data
- 20: First data source
- 22: Second data source
- 50: Update detector component
- 52: Common information model
- 53: Policy editor
- 54: Policy validator component
- 55: Policy information
- 56: Requirement refiner component
- 57: Predefined requirement criterion
- 58: Version controller component
- 59: Versioning area component
- 60: Staging component
- 65: Policy database
- 70: First version information
- 72: Second version information
- 80: Production projection
- 82: User-related client engineering application
- 84: Client versioning and management interface
- 85: User-related client versioning information

- 100: Computer-implemented method
- 102: Providing
- 104: Detecting
- 106: Providing
- 108: Validating
- 110: Verifying
- 112: Updating
- 114: Supplying
- 116: Marking
- 118: Repairing
- 120: Projecting

- 200: Data engineering system

## Claims

1. Computer-implemented method (100) for providing a data consistency between a first data source (20) and at least a second data source (22) in a data engineering system (200), comprising the following steps:
- Providing (102) first data (10) from at least a first data source (20) and / or at least a second data source (22);
- Detecting (104), by an update detector component (50), a change information (8) for the first data (10);
- Providing (106), by a version area component (59), a first version information (70) of the detected change information (8);
- Validating (108), the change information (8) for the first data (10), by a policy validator component (54), wherein a policy information (55) containing at least a consistency rule is executed on a common information model (52) to decide about a consistent state of the first data (10) defining whether the change information (8) can be applied to the first data (10),
- Updating (112), by the version controller component (58), the first version information (70) to a second version information (72) of the validated change information (8), when the consistent state of the change information (8) is confirmed, and in case, the consistent state of the change information (8) is not confirmed, perform a step (118) of repairing the detected data inconsistency of the change information (8), before re-validating the change information (8) and updating the first version information (70);
- Supplying (114) the change information (8) with the version information (70) as a production projection (80) to at least a client engineering application (82).

2. Computer-implemented method (100) according to any of the previous claims, wherein the step (106) of validating the change information (8) includes the step of verifying (110) the change information (8), by a requirement refiner component (56), whether the change information (8) fulfils at least a predefined requirement criterion (57).

3. Computer-implemented method (100) according to any of the previous claims, wherein the step (118) of repairing the detected data inconsistency of the change information (8) of the first data (10) comprises a step (116) of marking the detected data inconsistency and blocking to send the change information (8) to the production projection (80) as long as the detected data inconsistency of the change information (8) exists.

4. Computer-implemented method (100) according to any of the previous claims, wherein the step (118) of repairing the detected data inconsistency of the change information (8) comprises the step (120) of temporarily projecting the detected data inconsistency, by a client versioning and management interface (84), to a staging component (60) that initiates repair of the detected data inconsistency of the change information (8) of the first data (10).

5. Computer-implemented method (100) according to any of the previous claims, wherein after the step (118) of repairing the detected data inconsistency of the change information (8) is successfully performed, the repaired changed information (8) is sent back from the staging component (60) to the version controller component (58) for performing the step (108) of re-validating the repaired change information (8) of the first data (10).

6. Computer-implemented method (100) according to claim 5, wherein after successful re-validating of the change information (8) of the first data (10), providing the change information (8) to the second data source (22).

7. Computer-implemented method (100) according to any of the previous claims, wherein repair of the detected data inconsistency of the change information (8) of the first data (10) is performed by a user-related client engineering application (82).

8. Computer-implemented method (100) according to any of the previous claims, wherein the provided second version information (72) is permanent in case the change information (8) of the first data (10) is in a consistent state, and the provided second version information (72) is temporary in case the change information (8) of the first data (10) is in an inconsistent state.

9. Computer-implemented method (100) according to one of the previous claims, wherein the policy information (55) is provided by a policy database (65).

10. Computer-implemented method (100) according to claim 9, wherein the policy database (65) is connectable to at least a policy editor component (53) to edit the policy information (55) of the policy database (65).

11. Computer-implemented method (100) according to one of the previous claims, wherein a client versioning and management component (84) is provided that has interfaces to each of at least one of the version controller component (58), the requirement refiner component (56) and the policy editor (53) to provide user-related client versioning information (85) to any of these components.

12. Computer-implemented method (100) according to one of the previous claims, wherein the change information (8) is a newly-added data information contained in the first data source (20), but not in the second data source (22).

13. Data engineering system (200) configured to execute the method according one of the previous claims.

14. A computer comprising a processor configured to perform the method of any preceding claims 1 to 12.

15. A computer program product comprising instructions which, when the computer program is executed by a processor of a computer, causes the computer to perform the method of any of claims 1 to 12.
